(19) Europäisches Patentamt
European Patent Office
Office européen des brevets

(11) EP 4 008 566 B1

(12) # EUROPEAN PATENT SPECIFICATION

(45) Date of publication and mention of the grant of the patent:
**13.09.2023 Bulletin 2023/37**

(21) Application number: **21208279.6**

(22) Date of filing: **15.11.2021**

(51) International Patent Classification (IPC):
***B60C 1/00*** *(2006.01)* ***B60C 11/00*** *(2006.01)*
***B60C 11/03*** *(2006.01)* ***B60C 11/12*** *(2006.01)*
***B60C 13/00*** *(2006.01)*

(52) Cooperative Patent Classification (CPC):
**B60C 11/005; B60C 1/0016; B60C 1/0025; B60C 11/033; B60C 11/12;** B60C 2011/0025; B60C 2011/0341; B60C 2013/006; B60C 2200/04

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2020 JP 2020201915**

(43) Date of publication of application:
**08.06.2022 Bulletin 2022/23**

(73) Proprietor: **Sumitomo Rubber Industries, Ltd.**
**Kobe-shi,**
**Hyogo-ken 651-0072 (JP)**

(72) Inventors:
- **TOMISAKI, Yukari**
**Kobe-shi, Hyogo, 651-0072 (JP)**
- **KIDA, Yogun**
**Kobe-shi, Hyogo, 651-0072 (JP)**
- **HORIGUCHI, Takuya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 676 808 EP-A1- 3 279 011**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 008 566 B1

## Description

BACKGROUND OF THE INVENTION

Field of the Invention

The present invention relates to a pneumatic tire.

Description of the Background Art

There are the following demands in recent years from the viewpoint of economic efficiency and heightened interest in environmental problems. That is, demand for reducing fuel consumption has been intensified for automobiles and improvement in low fuel consumption performance has been intensely demanded also for pneumatic tires (hereinafter, simply referred to also as "tires") to be mounted on the automobiles.
Meanwhile, demand for reducing noise (road noise) generated owing to recesses and projections of the road surface has also been intensified from the viewpoint of stability in riding automobiles.
However, it is not easy to simultaneously realize improvement in low fuel consumption performance and reduction in road noise.
Thus, various technologies have been proposed in order to achieve both improvement in low fuel consumption performance and reduction in road noise (for example, WO2015/159538, Japanese Laid-Open Patent Publication No. 2018-103931, Japanese Laid-Open Patent Publication No. 2019-084961, and Japanese Laid-Open Patent Publication No. 2020-066394).
However, tires manufactured on the basis of the above conventional technologies cannot yet be said to have undergone sufficient achievement of both improvement in low fuel consumption performance and reduction in road noise, and are required to undergo further enhancement. In addition, the tires are required to also have further improved durabilities.
Other known tires are disclosed in EP 2676808 A and EP 3279011 A.

SUMMARY OF THE INVENTION

Considering this, the present invention addresses the problem of providing a pneumatic tire which has excellent durability and in which sufficient achievement of both improvement in low fuel consumption performance and reduction in road noise has been realized.
The present inventors conducted earnest studies for solving the above problem and have found that the above problem can be solved by the features described below.
Consequently, the present inventors have completed the present invention.
A first aspect of the present invention is directed to a pneumatic tire including: a tread portion having a tread rubber forming an outer surface; and sidewall portions each having a sidewall rubber forming an outer surface, wherein

the tread rubber includes

a cap rubber having an outer surface portion on which a ground contact surface is formed by a plurality of circumferential groove portions and a plurality of circumferential land portions, and
a base rubber disposed inward of the cap rubber in a tire radial direction so as to extend to each sidewall portion,

in the ground contact surface, an area formed by the circumferential groove portions is 15 to 30% of a total ground contact area, and
a loss tangent ($\tan\delta b$) of the base rubber and a loss tangent ($\tan\delta s$) of the sidewall rubber which are measured under a condition of a temperature of 30°C, a frequency of 10 Hz, an initial strain of 5%, and a dynamic strain of 1% with a deformation mode being a tension mode, satisfy the following (expression 1),

$$(\tan\delta b/\tan\delta s)<1 \cdots \text{(expression 1)}.$$

A second aspect of the present invention is directed to the pneumatic tire according to the first aspect, wherein a total cross-sectional area of the plurality of circumferential groove portions is not lower than 10% and lower than 30% of a cross-sectional area of the tread portion.
A third aspect of the present invention is directed to the pneumatic tire according to the first or second aspect,

wherein
a loss tangent (tanδc) of the cap rubber and the loss tangent (tanδb) of the base rubber which are measured under the condition of a temperature of 30°C, a frequency of 10 Hz, an initial strain of 5%, and a dynamic strain of 1% with the deformation mode being the tension mode, satisfy the following (expression 2),

$$1.3 \leq (\tan\delta c/\tan\delta b) < 3.0 \cdots \text{(expression 2)}.$$

A fourth aspect of the present invention is directed to the pneumatic tire according to any one of the first to third aspects, wherein
a loss tangent (tanδc) of the cap rubber, the loss tangent (tanδb) of the base rubber, and the loss tangent (tanδs) of the sidewall rubber which are measured under the condition of a temperature of 30°C, a frequency of 10 Hz, an initial strain of 5%, and a dynamic strain of 1% with the deformation mode being the tension mode, satisfy the following (expression 3),

$$\tan\delta b < \tan\delta s < \tan\delta c \cdots \text{(expression 3)}.$$

A fifth aspect of the present invention is directed to the pneumatic tire according to any one of the first to fourth aspects, wherein
a complex elastic modulus Eb* of the base rubber and a complex elastic modulus Ec* of the cap rubber which are measured under a condition of a temperature of 30°C, a frequency of 10 Hz, an initial strain of 5%, and a dynamic strain of 1% with the deformation mode being a stretching mode, satisfy the following (expression 4),

$$Eb^{*}/Ec^{*} < 1 \cdots \text{(expression 4)}.$$

A sixth aspect of the present invention is directed to the pneumatic tire according to any one of the first to fifth aspects, wherein

a groove portion other than the circumferential groove portions is formed in a surface portion of the tread portion, and in the ground contact surface, an area of the groove portion other than the circumferential groove portions is smaller than a total area of the circumferential groove portions.

A seventh aspect of the present invention is directed to the pneumatic tire according to any one of the first to sixth aspects, wherein
if the ground contact surface is divided into four equal regions in a tire width direction, a total area value obtained by subtracting areas of grooves in two inner-side regions among the four regions from a total area of the two inner-side regions is 30 to 60% of an area obtained by subtracting areas of grooves in an entirety of the ground contact surface from an area of the entirety of the ground contact surface.

An eighth aspect of the present invention is directed to the pneumatic tire according to any one of the first to seventh aspects, wherein

if the ground contact surface is divided into four equal regions in a tire width direction, a circumferential land portion that is included among the plurality of circumferential land portions and that is located in a region closest to a tire equator among the four regions has a sipe formed so as to connect both side portions of the circumferential land portion to each other, and
a straight line connecting both end portions of the sipe to each other is tilted by 15 to 25° with respect to the width direction.

A ninth aspect of the present invention is directed to the pneumatic tire according to any one of the first to eighth aspects, wherein
if the ground contact surface is divided into four equal regions in a tire width direction, a proportion of a total area of circumferential groove portions that are included among the plurality of circumferential groove portions and that are located in two inner-side regions among the four regions to a total area of the two inner-side regions is lower than a proportion of a total area of circumferential groove portions that are included among the plurality of circumferential groove portions and that are located in two outer-side regions among the four regions to a total area of the two outer-side regions.

A tenth aspect of the present invention is directed to the pneumatic tire according to any one of the first to ninth aspects, wherein

the tread rubber is formed from a rubber composition containing a styrene-butadiene rubber and/or a butadiene rubber as a rubber component.

An eleventh aspect of the present invention is directed to the pneumatic tire according to the tenth aspect, wherein the tread rubber is formed from the rubber composition further containing not smaller than 50 parts by mass of a silica per 100 parts by mass of the rubber component.

A twelfth aspect of the present invention is directed to the pneumatic tire according to any one of the first to eleventh aspects, wherein

the sidewall rubber is formed from a rubber composition containing an isoprene-based rubber and a butadiene rubber as rubber components.

A thirteenth aspect of the present invention is directed to the pneumatic tire according to the twelfth aspect, wherein

the sidewall rubber is formed from the rubber composition further containing not smaller than 50 parts by mass of a carbon black per 100 parts by mass of the rubber components.

A fourteenth aspect of the present invention is directed to the pneumatic tire according to any one of the first to thirteenth aspects, wherein

the pneumatic tire is a pneumatic tire for passenger cars.

According to the present invention, it is possible to provide a pneumatic tire which has excellent durability and in which sufficient achievement of both improvement in low fuel consumption performance and reduction in road noise has been realized.

## DESCRIPTION OF THE PREFERRED EMBODIMENTS

Hereinafter, the present invention will be described on the basis of an embodiment.

### [1] Features of Tire according to Present Invention

Firstly, features of a tire according to the present invention will be described.

### 1. Overview

The tire according to the present invention is a pneumatic tire including: a tread portion having a tread rubber forming an outer surface; and sidewall portions each having a sidewall rubber forming an outer surface. The tire according to the present invention is characterized in that the tread rubber includes: a cap rubber having an outer surface portion on which a ground contact surface is formed by a plurality of circumferential groove portions and a plurality of circumferential land portions; and a base rubber disposed inward of the cap rubber in a tire radial direction so as to extend to each sidewall portion.

In addition, the tire according to the present invention is characterized in that, in the ground contact surface of the tread portion, an area formed by the circumferential groove portions is 15 to 30% of a total ground contact area.

Further, the tire according to the present invention is characterized in that a loss tangent ($\tan\delta b$) of the base rubber and a loss tangent ($\tan\delta s$) of the sidewall rubber which are measured under a condition of a temperature of 30°C, a frequency of 10 Hz, an initial strain of 5%, and a dynamic strain of 1% with a deformation mode being a tension mode, satisfy $(\tan\delta b/\tan\delta s)<1$ (expression 1).

According to the present invention, provision of the above features in terms of structures and configurations and the above features in terms of materials make it possible to provide a pneumatic tire which has excellent durability and in which sufficient achievement of both improvement in low fuel consumption performance and reduction in road noise has been realized, as described later.

In the above description, the "ground contact surface" refers to an outer circumferential surface, over the entire circumference of the tire, that comes into contact with a road surface when the tire is rolled with a normal load being applied to the tire from a normal state where the tire is mounted on a normal rim and inflated to a normal internal pressure and no load is applied to the tire.

A ground contact area can be obtained by, for example, mounting the tire on the normal rim, inflating the tire to the normal internal pressure, leaving the tire at rest for 24 hours at 25°C, then applying black ink onto the surface of the tread, and applying the normal load to the tire to press the tire against a thick piece of paper so that the black ink is transferred to the piece of paper. The total area of the land portions painted in black and the groove portions in white is the "total ground contact area".

Here, the "normal rim" is a rim that is defined, in a standard system including a standard on which the tire is based, by the standard for each tire. For example, the "normal rim" refers to the standard rim at an applicable size described in "JATMA YEAR BOOK" in the Japan Automobile Tyre Manufacturers Association, Inc., (JATMA) standard,

the "Measuring Rim" described in "STANDARDS MANUAL" in the European Tyre and Rim Technical Organisation (ETRTO) standard, or the "Design Rim" described in "YEAR BOOK" in the Tire and Rim Association, Inc., (TRA) standard. In the case of a tire that is not specified in any standard, the "normal rim" refers to the rim having the smallest diameter and, next to this, the rim having the smallest width among rims that allow the tire to be mounted thereon and that allows the internal pressure of the tire to be maintained, i.e., rims none of which allows occurrence of air leakage from between the rim and the tire.

The "normal internal pressure" is an air pressure that is defined by the aforementioned standard for each tire. The "normal internal pressure" refers to the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined by the aforementioned standard for each tire and refers to the maximum mass that is permitted to be applied to the tire. The "normal load" is the maximum load capacity in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

2. Mechanism for Exhibiting Advantageous Effects of Tire according to Present Invention

The following inference is made regarding the mechanism for exhibiting the advantageous effects of the tire according to the present invention, i.e., the mechanism for imparting excellent durability and realizing sufficient achievement of both improvement in low fuel consumption performance and reduction in road noise.

As described above, in the tire according to the present invention, the tread rubber includes the cap rubber having the outer surface portion on which the ground contact surface is formed by the plurality of circumferential groove portions and the plurality of circumferential land portions, and the base rubber disposed inward of the cap rubber in the tire radial direction, the base rubber is disposed so as to extend to the sidewall portion, and the loss tangent (tanδb) of the base rubber measured under the condition of a temperature of 30°C, a frequency of 10 Hz, an initial strain of 5%, and a dynamic strain of 1% with the deformation mode being the tension mode is smaller than the loss tangent (tanδs) of the sidewall rubber measured under the said condition ((tanδb/tanδs)<1).

It is considered that: each loss tangent tanδ is a parameter indicating energy absorption performance; a larger value of the loss tangent tanδ enables energy to be absorbed more greatly and enables impact generated during running to be mitigated more greatly; and, if the loss tangent (tanδb) of the base rubber is set to be smaller than the loss tangent (tanδs) of the sidewall rubber and the base rubber is disposed so as to extend to the sidewall portion as described above, impact received from a road surface by the tread portion can be transmitted to the sidewall portion in a sufficiently mitigated state. As a result, it is considered that, even if the thickness of the sidewall rubber is made small, the impact from the road surface can be sufficiently mitigated, and thus reduction in the weight of the tire can be realized to exhibit sufficient low rolling resistance performance, and furthermore, generation of road noise can be sufficiently reduced, whereby achievement of both improvement in low fuel consumption performance and reduction in road noise can be realized. In addition, improvement in durability can be realized.

Each tanδ described above can be measured by using, for example, a viscoelasticity measurement device such as "EPLEXOR (registered trademark)" manufactured by NETZSCH-Gerätebau GmbH.

In addition, in the ground contact surface of the tread portion of the tire according to the present invention, an area formed by the circumferential groove portions is set to be 15 to 30% of the total ground contact area.

If the area is set to be not higher than 30%, uneven wear is suppressed so that improvement in durability can be realized. The area is more preferably not higher than 27% and further preferably not higher than 24%. Meanwhile, if the area is set to be not lower than 15%, improvement in low rolling resistance performance can be realized. The area is more preferably not lower than 18% and further preferably not lower than 21%.

[2] More Preferable Modes of Tire according to Present Invention

The tire according to the present invention can obtain more prominent effects by taking the following modes.

1. Circumferential Grooves Formed in Tread Portion

In the tire according to the present invention, the total cross-sectional area of the plurality of circumferential groove portions is preferably not lower than 10% and lower than 30% of the cross-sectional area of the tread portion.

If the total cross-sectional area is set to be lower than 30%, uneven wear is suppressed so that improvement in durability can be realized. The total cross-sectional area is more preferably not higher than 26% and further preferably not higher than 22%. Meanwhile, if the total cross-sectional area is set to be not lower than 10%, improvement in low rolling resistance performance can be realized. The total cross-sectional area is more preferably not lower than 14%

and further preferably not lower than 18%.

2. Loss Tangent (tanδ)

In the tire according to the present invention, the loss tangent (tanδc) of the cap rubber and the loss tangent (tanδb) of the base rubber which are measured under the condition of a temperature of 30°C, a frequency of 10 Hz, an initial strain of 5%, and a dynamic strain of 1% with the deformation mode being the tension mode, preferably satisfy $1.3 \leq (\tan\delta c/\tan\delta b) < 3.0$ (expression 2).

As aforementioned, it is considered that: each loss tangent tanδ is a parameter indicating energy absorption performance; and a larger value of the loss tangent tanδ enables energy to be absorbed more greatly and enables impact generated during running to be mitigated more greatly.

Thus, it is considered that, if the tanδc is set to be larger than the tanδb so as to satisfy the above relationship, impact received from a road surface by the tread rubber forming the outer surface of the tread portion can be mitigated before being transmitted to the base rubber on the inner side of the tread rubber, and thus reduction in road noise can be realized, and furthermore, improvement in durability can also be realized.

Regarding the lower limit value of the above (tanδc/tanδb), the above (tanδc/tanδb) is more preferably not lower than 1.6 and further preferably not lower than 1.9. Meanwhile, regarding the upper limit value of the above (tanδc/tanδb), the above (tanδc/tanδb) is more preferably not higher than 2.7 and further preferably not higher than 2.4.

The loss tangent (tanδc) of the cap rubber takes a larger value than the loss tangent (tanδb) of the base rubber and the loss tangent (tanδs) of the sidewall rubber, the three loss tangents having been measured under the same condition. That is, the three loss tangents preferably satisfy $\tan\delta b < \tan\delta s < \tan\delta c$ (expression 3). This satisfaction makes it possible to further improve durability and to realize further achievement of both improvement in low fuel consumption performance and reduction in road noise.

3. Complex Elastic Modulus

In the tire according to the present invention, a complex elastic modulus Eb* of the base rubber and a complex elastic modulus Ec* of the cap rubber which are measured under a condition of a temperature of 30°C, a frequency of 10 Hz, an initial strain of 5%, and a dynamic strain of 1% with the deformation mode being a stretching mode, preferably satisfy $Eb^*/Ec^* < 1$ (expression 4). If the complex elastic modulus Eb* of the base rubber is set to be smaller than the complex elastic modulus Ec* of the cap rubber in this manner, a strain generated in the base rubber becomes larger than a strain generated in the cap rubber when the tire is freely rolled. Consequently, further improvement in low rolling resistance performance can be realized so that sufficiently low fuel consumption performance can be exhibited. The Eb*/Ec* is more preferably not higher than 0.8 and further preferably not higher than 0.6.

These complex elastic moduli E* can be measured by using, for example, a viscoelasticity measurement device that is "EPLEXOR (registered trademark)" manufactured by NETZSCH-Gerätebau GmbH.

4. Groove Portion Other Than Circumferential Groove Portions

In the tire according to the present invention, a groove portion other than the circumferential groove portions is formed in a surface portion of the tread portion, and, in the ground contact surface, an area of the groove portion other than the circumferential groove portions is preferably smaller than a total area of the circumferential groove portions. Specifically, the area of the groove portion other than the circumferential groove portions is, for example, preferably not higher than 90%, more preferably not higher than 85%, and further preferably not higher than 80% of the total area of the circumferential groove portions.

If the groove portion other than the circumferential groove portions is formed such that the area thereof is smaller than the total area of the circumferential groove portions in this manner, sufficient drainage performance can be ensured, and furthermore, grip force to be exerted on a road surface can be sufficiently ensured. Therefore, further achievement of both improvement in low fuel consumption performance and reduction in road noise can be realized.

5. Ground Contact Surface

In the tire according to the present invention, if the ground contact surface is divided into four equal regions in a tire width direction, a total area value obtained by subtracting areas of grooves in two inner-side regions among the four regions from a total area of the two inner-side regions is preferably 30 to 60% of an area obtained by subtracting areas of grooves in an entirety of the ground contact surface from an area of the entirety of the ground contact surface. Consequently, the ground-contact pressure on the ground contact surface is made uniform, and thus the rolling resistance can be made lower, whereby the low rolling resistance performance can be further improved. The total area value is

more preferably 40 to 55% and further preferably 45 to 50%.

Moreover, if the ground contact surface is divided into four equal regions in the tire width direction, it is preferable that: a circumferential land portion that is included among the plurality of circumferential land portions and that is located in a region closest to a tire equator among the four regions has a sipe formed so as to connect both side portions of the circumferential land portion to each other; and a straight line connecting both end portions of the sipe to each other is tilted by not smaller than 15° and not larger than 25° with respect to the width direction. Consequently, drainage performance in the tread portion is more improved, and improvement in steering stability and durability can be realized. The "sipe" refers to a thin groove formed in the outer surface of the tread portion so as to have a width not larger than 1.5 mm. The angle of the tilt is more preferably not smaller than 17° and further preferably not smaller than 19°. Meanwhile, the angle of the tilt is more preferably not larger than 23° and further preferably not larger than 21°.

Moreover, if the ground contact surface is divided into four equal regions in the tire width direction, it is preferable that a proportion of a total area of circumferential groove portions that are included among the plurality of circumferential groove portions and that are located in two inner-side regions among the four regions to a total area of the two inner-side regions is lower than a proportion of a total area of circumferential groove portions that are included among the plurality of circumferential groove portions and that are located in two outer-side regions among the four regions to a total area of the two outer-side regions. Consequently, the rigidity of the ground contact surface at the two inner-side regions thereof can be sufficiently ensured, and improvement in steering stability and durability can be realized. This applies also to a case where no circumferential groove portions are formed in the two inner-side regions.

[3] Specific Embodiment of Present Invention

Hereinafter, the present invention will be specifically described on the basis of an embodiment.

1. Rubber Composition

In the present embodiment, any of various blending materials described below can be used for the tread rubber (the cap rubber and the base rubber) and the sidewall rubber. The tread rubber or the sidewall rubber can be obtained by appropriately adjusting the blending amount of each material according to desired physical properties of the tread rubber or the sidewall rubber.

(1) Blending Material

(a) Rubber Component

In the present embodiment, rubbers (polymers) generally used for manufacturing tires such as butadiene rubbers (BRs), styrene-butadiene rubbers (SBRs), isoprene-based rubbers, and nitrile rubbers (NBRs) can be used as rubber components. As the tread rubber (the cap rubber and the base rubber), SBRs and/or BRs are preferably used. As the sidewall rubber, isoprene-based rubbers and BRs are preferably used.

(I) BR

The amount of a BR contained in 100 parts by mass of the rubber component is preferably not smaller than 40 parts by mass, more preferably not smaller than 50 parts by mass, and further preferably not smaller than 55 parts by mass. Meanwhile, the amount is preferably not larger than 80 parts by mass, more preferably not larger than 75 parts by mass, and further preferably not larger than 70 parts by mass.

The weight-average molecular weight of the BR is, for example, larger than 100 thousand and smaller than 2 million. The vinyl bond content of the BR is, for example, higher than 1% by mass and lower than 30% by mass. The cis content of the BR is, for example, higher than 1% by mass and not higher than 98% by mass. The trans content of the BR is, for example, higher than 1% by mass and lower than 60% by mass. The cis content can be measured by infrared absorption spectrometry.

The BR is not particularly limited, and a BR having a high cis content (cis content not lower than 90%), a BR having a low cis content, a BR containing syndiotactic polybutadiene crystals, or the like can be used. The BR may be either an unmodified BR or a modified BR. As the modified BR, for example, a BR obtained by modification with a compound (modifier) represented by the following formula can be used.

[Chem. 1]

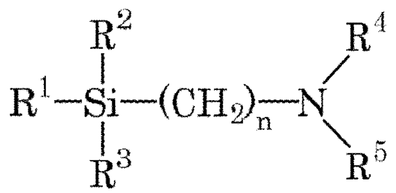

In the formula, $R^1$, $R^2$, and $R^3$ are the same as or different from one another and each represent an alkyl group, an alkoxy group, a silyloxy group, an acetal group, a carboxyl group (-COOH), a mercapto group (-SH), or a derivative thereof. $R^4$ and $R^5$ are the same as or different from each other and each represent a hydrogen atom or an alkyl group. $R^4$ and $R^5$ may be bound to each other to form a ring structure together with the nitrogen atom. "n" represents an integer.

Examples of the modified BR obtained by modification with the compound (modifier) represented by the above formula can include a BR obtained by modifying polymerization terminals (active terminals) with the compound represented by the formula.

As $R^1$, $R^2$, and $R^3$, an alkoxy group (preferably an alkoxy group having 1 to 8 carbon atoms and more preferably an alkoxy group having 1 to 4 carbon atoms) is suitable. As $R^4$ and $R^5$, an alkyl group (preferably an alkyl group having 1 to 3 carbon atoms) is suitable. "n" is preferably 1 to 5, more preferably 2 to 4, and further preferably 3. In the case where $R^4$ and $R^5$ are bound to each other to form a ring structure together with the nitrogen atom, a four to eight-membered ring is preferably formed. Examples of the alkoxy group further include cycloalkoxy groups (a cyclohexyloxy group and the like) and aryloxy groups (a phenoxy group, a benzyloxy group, and the like).

Specific examples of the above modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, 3-diethylaminopropyltriethoxysilane, and the like. These modifiers may be used singly, or two or more of these modifiers may be used in combination.

As the modified BR, modified BRs obtained by modification with the following compound (modifier) can also be used. Examples of the modifier can include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; tertiary amines containing an epoxy group, such as 4,4'- diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane; acid chlorides containing an amino group, such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; silane compounds containing an epoxy group, such as 1,3-bis-(glycidyloxypropyl)-tetramethyldisiloxane and (3-glycidyloxypropyl)-pentamethyldisiloxane; silane compounds containing a sulfide group, such as (trimethylsilyl)[3-(trimethoxysilyl)propyl]sulfide, (trimethylsilyl)[3-(triethoxysilyl)propyl] sulfide, (trimethylsilyl)[3-(tripropoxysilyl)propyl] sulfide, (trimethylsilyl)[3-(tributoxysilyl)propyl] sulfide, (trimethylsilyl) [3-(methyldimethoxysilyl)propyl] sulfide, (trimethylsilyl)[3-(methyldiethoxysilyl)propyl] sulfide, (trimethylsilyl)[3-(methyldipropoxysilyl)propyl] sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N' ,N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone; and the like. The modification with the above compound (modifier) can be performed by a known method. These modified BRs may be used singly, or two or more of these modified BRs may be used in combination.

As the BR, it is possible to use, for example, products from Ube Industries, Ltd., JSR Corporation, Asahi Kasei Corporation, Zeon Corporation, etc.

(II) Isoprene-Based Rubber

The amount (total amount) of isoprene-based rubbers contained in 100 parts by mass of the rubber component is preferably not smaller than 25 parts by mass, more preferably not smaller than 30 parts by mass, and further preferably not smaller than 35 parts by mass. Meanwhile, the amount (total amount) is preferably not larger than 55 parts by mass, more preferably not larger than 50 parts by mass, and further preferably not larger than 45 parts by mass.

Examples of the isoprene-based rubbers include natural rubber (NR), isoprene rubber (IR), reformed NR, modified NR, modified IR, and the like. NR is preferable since NR has excellent strength.

As the NR, it is possible to use, for example, NRs generally used in the tire industry such as SIR20, RSS#3, and TSR20. The IR is not particularly limited, and it is possible to use, for example, IRs generally used in the tire industry such as IR2200 manufactured by Zeon Corporation. Examples of the reformed NR include deproteinized natural rubber (DPNR), ultra-pure natural rubber (UPNR), and the like. Examples of the modified NR include epoxidized natural rubber (ENR), hydrogenated natural rubber (HNR), grafted natural rubber, and the like. Examples of the modified IR include epoxidized isoprene rubber, hydrogenated isoprene rubber, grafted isoprene rubber, and the like. These isoprene-based rubbers may be used singly, or two or more of these isoprene-based rubbers may be used in combination.

(III) SBR

The rubber component may contain an SBR , as necessary. In this case, the amount of the SBR contained in 100 parts by mass of the rubber component is, for example, not smaller than 1 part by mass and smaller than 100 parts by mass. The amount is more preferably larger than 5 parts by mass, further preferably larger than 15 parts by mass, and particularly preferably larger than 25 parts by mass. Meanwhile, the amount is preferably smaller than 65 parts by mass, more preferably smaller than 55 parts by mass, further preferably smaller than 45 parts by mass, and particularly preferably smaller than 35 parts by mass.

The weight-average molecular weight of the SBR is, for example, larger than 100 thousand and smaller than 2 million. The styrene content of the SBR is, for example, preferably higher than 5% by mass and lower than 50% by mass, more preferably higher than 10% by mass and lower than 40% by mass, and further preferably higher than 20% by mass and lower than 35% by mass. The vinyl bond content (1,2-bond butadiene unit content) of the SBR is, for example, higher than 5% by mass and lower than 70% by mass. Structure identification for the SBR (measurement of the styrene content and the vinyl bond content) can be performed by using, for example, a JNM-ECA series device manufactured by JEOL Ltd.

The SBR is not particularly limited, and, for example, emulsion-polymerized styrene-butadiene rubber (E-SBR), solution-polymerized styrene-butadiene rubber (S-SBR), and the like can be used. The SBR may be either an unmodified SBR or a modified SBR. These SBRs may be used singly, or two or more of these SBRs may be used in combination.

The modified SBR only has to be an SBR having a functional group that interacts with a filler such as silica. Examples of the modified SBR include: a terminal-modified SBR obtained by modifying at least one terminal of an SBR with a compound (modifier) having the above functional group (a terminal-modified SBR having the above functional group at a terminal thereof); a main-chain-modified SBR having the above functional group in the main chain thereof; a main-chain/terminal-modified SBR having the above functional group in the main chain thereof and at a terminal thereof (for example, a main-chain/terminal-modified SBR that has the above functional group in the main chain thereof and that has at least one terminal modified with the above modifier); a terminal-modified SBR that has been modified (coupled) with a multifunctional compound having two or more epoxy groups in the molecule thereof and to which a hydroxyl group or an epoxy group has been introduced; and the like.

As the SBR, it is possible to use, for example, SBRs manufactured by and available from Sumitomo Chemical Co., Ltd., JSR Corporation, Asahi Kasei Corporation, Zeon Corporation, etc. These SBRs may be used singly, or two or more of these SBRs may be used in combination.

(IV) Another Rubber Component

In addition, as another rubber component, a rubber (polymer) generally used for manufacturing tires such as nitrile rubber (NBR) may be contained.

(b) Blending Material Other Than Rubber Component

(I) Filler

In the present embodiment, the rubber composition preferably contains, as fillers, a carbon black, a silica, and the like which are reinforcing agents. Examples of fillers other than the above carbon black and silica can include calcium carbonate, talc, alumina, clay, aluminum hydroxide, mica, and the like. In the case of using a silica, the silica is preferably used in combination with a silane coupling agent.

(i) Carbon Black

The amount of the carbon black contained per 100 parts by mass of the rubber component is, for example, preferably not smaller than 10 parts by mass, more preferably not smaller than 30 parts by mass, further preferably not smaller than 35 parts by mass, and particularly preferably not smaller than 50 parts by mass. Meanwhile, the amount is preferably not larger than 100 parts by mass, more preferably not larger than 90 parts by mass, and further preferably not larger than 80 parts by mass. Consequently, the crack growth resistance, the durability, the resistance to degradation due to ultraviolet rays, and the like of the tire can be improved.

The nitrogen adsorption specific surface area ($N_2SA$) of the carbon black is, for example, larger than 30 $m^2/g$ and smaller than 250 $m^2/g$. The dibutyl phthalate (DBP) absorption amount of the carbon black is, for example, larger than 50 ml/100 g and smaller than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and examples thereof can include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; graphite; and the like.

As commercially available products, it is possible to use, for example, products from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc. One of these carbon blacks may be used alone, or two or more of these carbon blacks may be used in combination.

(ii) Silica

The rubber composition may further contain a silica, as necessary. From the viewpoint of obtaining favorable durability, the BET specific surface area of the silica is preferably larger than 140 $m^2/g$ and more preferably larger than 160 $m^2/g$. Meanwhile, from the viewpoint of obtaining favorable rolling resistance during high-speed running, the BET specific surface area is preferably smaller than 250 $m^2/g$ and more preferably smaller than 220 $m^2/g$. From the viewpoint of obtaining favorable durability, the amount of the silica contained per 100 parts by mass of the rubber component is preferably larger than 35 parts by mass, more preferably larger than 40 parts by mass, further preferably larger than 45 parts by mass, and particularly preferably not smaller than 50 parts by mass. Meanwhile, from the viewpoint of obtaining favorable rolling resistance during high-speed running, the amount is preferably smaller than 70 parts by mass, more preferably smaller than 65 parts by mass, and further preferably smaller than 60 parts by mass. The above BET specific surface area is a value of $N_2SA$ measured by the BET method according to ASTM D3037-93.

Examples of the silica include dry-process silica (anhydrous silica), wet-process silica (hydrous silica), and the like. Among these silicas, wet-process silica is preferable because of a high silanol group content thereof.

As the silica, it is possible to use, for example, products from Evonik Industries AG, Rhodia, Tosoh Silica Corporation, Solvay Japan, Ltd., Tokuyama Corporation, etc.

(iii) Silane Coupling Agent

As aforementioned, in the case of using a silica as a filler, a silane coupling agent is preferably contained together with the silica. The silane coupling agent is not particularly limited, and examples thereof include: sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto-based silane coupling

agents such as 3-mercaptopropyltrimethoxysilane, 2-mercaptoethyltriethoxysilane, and NXT and NXT-Z manufactured by Momentive Performance Materials Inc.; vinyl-based silane coupling agents such as vinyltriethoxysilane and vinyltrimethoxysilane; amino-based silane coupling agents such as 3-aminopropyltriethoxysilane and 3-aminopropyltrimethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. These silane coupling agents may be used singly, or two or more of these silane coupling agents may be used in combination.

As the silane coupling agent, it is possible to use, for example, products from Evonik Industries AG, Momentive Performance Materials Inc., Shin-Etsu Chemical Co., Ltd., Tokyo Chemical Industry Co., Ltd., AZmax. Co., DuPont Toray Specialty Materials K.K., etc.

The amount of the silane coupling agent contained per 100 parts by mass of the silica is, for example, larger than 3 parts by mass and smaller than 25 parts by mass.

(iv) Another Filler

The rubber composition may further contain, in addition to the above carbon black and silica, fillers generally used in the tire industry, e.g., calcium carbonate, talc, alumina, clay, aluminum hydroxide, and mica. The total amount of these fillers contained per 100 parts by mass of the rubber component is, for example, larger than 0.1 parts by mass and smaller than 200 parts by mass.

(II) Softener

The rubber composition may contain, as softeners, an oil (including extender oil), a liquid rubber, and the like. The total amount of these softeners per 100 parts by mass of the rubber component is, for example, preferably larger than 5 parts by mass, more preferably larger than 10 parts by mass, and further preferably larger than 12 parts by mass. Meanwhile, the total amount is preferably smaller than 30 parts by mass, more preferably smaller than 20 parts by mass, and further preferably smaller than 17 parts by mass. The amount of the oil contained is inclusive also of the amount of oil contained in rubber (oil-extended rubber).

Examples of the oil include: mineral oils generally called process oils; vegetable fats and oils; and mixtures thereof. As the process oils (mineral oils), it is possible to use, for example, paraffinic process oil, aromatic process oil, naphthenic process oil, and the like. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, tung oil, and the like. These oils may be used singly, or two or more of these oils may be used in combination.

As the process oils (mineral oils), it is possible to use, for example, products from Idemitsu Kosan Co., Ltd., Sankyo Yuka Kogyo K.K., ENEOS Corporation, Olisoy, H&R, Hokoku Corporation, Showa Shell Sekiyu K.K., FUJI KOSAN COMPANY, LTD., etc.

The liquid rubber listed as a softener is a polymer that takes liquid form at normal temperature (25°C) and that has, as a constituent element, the same monomer as that of a solid rubber. Examples of the liquid rubber include a farnesene-based polymer, a liquid diene-based polymer, hydrogenated products thereof, and the like.

The farnesene-based polymer is a polymer obtained by polymerizing farnesene and has a structural unit based on farnesene. As farnesene, there are isomers such as α-farnesene ((3E,7E)-3,7,11-trimethyl-1,3,6,10-dodecatetraene) and β-farnesene (7,11-dimethyl-3-methylene-1,6,10-dodecatriene).

The farnesene-based polymer may be a homopolymer of farnesene (farnesene homopolymer) or a copolymer of farnesene and a vinyl monomer (farnesene-vinyl monomer copolymer).

Examples of the liquid diene-based polymer include liquid styrene-butadiene copolymer (liquid SBR), liquid butadiene polymer (liquid BR), liquid isoprene polymer (liquid IR), liquid styrene-isoprene copolymer (liquid SIR), and the like.

The weight-average molecular weight (Mw) of the liquid diene-based polymer measured in terms of polystyrene through gel permeation chromatography (GPC) is, for example, larger than $1.0 \times 10^3$ and smaller than $2.0 \times 10^5$. In the present specification, the Mw of the liquid diene-based polymer is a polystyrene-equivalent value measured through gel permeation chromatography (GPC).

As the liquid rubber, it is possible to use, for example, products from KURARAY CO., LTD., Cray Valley, etc.

(III) Resin Component

The rubber composition preferably contains a resin component, as necessary. The resin component may take

solid form or liquid form at normal temperature. Specific examples of the resin component include resins such as styrene-based resin, coumarone-based resin, terpene-based resin, C5 resin, C9 resin, C5/C9 resin, and acrylic-based resin. Two or more of these resin components may be used in combination. The amount of the resin component contained per 100 parts by mass of the rubber component is larger than 2 parts by mass. Meanwhile, the amount is preferably smaller than 45 parts by mass and more preferably smaller than 30 parts by mass.

The styrene-based resin is a polymer in which a styrene-based monomer has been used as a constituent monomer. Examples of the styrene-based resin include: a polymer obtained by polymerization with a styrene-based monomer as a main component (not lower than 50% by mass); and the like. Specific examples of the styrene-based resin include: homopolymers respectively obtained by individually polymerizing styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, and the like); copolymers each obtained by copolymerizing two or more styrene-based monomers; and copolymers of styrene-based monomers and other monomers that can be copolymerized with the styrene-based monomers.

The aforementioned other monomers can be exemplified by: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; α,β-unsaturated carboxylic acids or acid anhydrides thereof such as maleic anhydride; and the like.

As the coumarone-based resin, coumarone-indene resin is preferable. The coumarone-indene resin is a resin that contains coumarone and indene as monomer components that form the backbone (main chain) of the resin. Examples of monomer components contained in the backbone other than coumarone and indene include styrene, α-methylstyrene, methylindene, vinyltoluene, and the like.

The amount of the coumarone-indene resin contained per 100 parts by mass of the rubber component is, for example, larger than 1.0 part by mass and smaller than 50.0 parts by mass.

The hydroxyl value (OH value) of the coumarone-indene resin is, for example, larger than 15 mg KOH/g and smaller than 150 mg KOH/g. The OH value is the amount (represented as the number of milligrams) of potassium hydroxide required to neutralize acetic acid bound to hydroxyl groups during acetylation of 1 g of the resin. The OH value is a value measured by potentiometric titration (JIS K 0070: 1992).

The softening point of the coumarone-indene resin is, for example, higher than 30°C and lower than 160°C. The softening point is defined in JIS K 6220-1: 2001. Specifically, the softening point is a temperature that is measured with a ring and ball softening point measuring device and at which the ball has descended.

Examples of the terpene-based resin include polyterpenes, terpene phenols, aromatic modified terpene resins, and the like. The polyterpenes are resins obtained by polymerizing terpene compounds, and hydrogenated products thereof. The terpene compounds are hydrocarbons represented by a composition of $(C_5H_8)_n$ and oxygenated derivatives thereof. The terpene compounds are compounds that have, as a basic backbone, terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, γ-terpineol, and the like.

Examples of the polyterpenes include terpene resins formed from the above terpene compounds, such as α-pinene resin, β-pinene resin, limonene resin, dipentene resin, and β-pinene-limonene resin. The examples further include hydrogenated terpene resins obtained by hydrogenating these terpene resins. Examples of the terpene phenols include: a resin obtained by copolymerization of any of the above terpene compounds and a phenol-based compound; and a resin obtained by hydrogenating the resin. Specific examples of the terpene phenols include a resin obtained by condensation of the above terpene compound, a phenol-based compound, and formalin. Examples of the phenol-based compound include phenol, bisphenol A, cresol, xylenol, and the like. Examples of the aromatic modified terpene resins include: a resin obtained by modifying a terpene resin with an aromatic compound; and a resin obtained by hydrogenating the resin. The aromatic compound is not particularly limited as long as the aromatic compound is a compound having an aromatic ring. Examples of the aromatic compound include: phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; indene; and the like.

The "C5 resin" refers to a resin obtained by polymerizing a C5 fraction. Examples of the C5 fraction include a petroleum fraction having 4 or 5 carbon atoms, such as cyclopentadiene, pentene, pentadiene, or isoprene. As the C5-based petroleum resin, a dicyclopentadiene resin (DCPD resin) is suitably used.

The "C9 resin" refers to a resin obtained by polymerizing a C9 fraction and may be a hydrogenated product or a modified product of the resin. Examples of the C9 fraction include petroleum fractions having 8 to 10 carbon atoms, such as vinyltoluene, alkylstyrene, indene, and methylindene. As specific examples of the C9 resin, coumarone-indene resin, coumarone resin, indene resin, and aromatic vinyl-based resin are suitably used. As the aromatic vinyl-based resin, a homopolymer of α-methylstyrene or styrene, or a copolymer of α-methylstyrene and styrene, is preferable, and

a copolymer of α-methylstyrene and styrene is more preferable, for the reason that the homopolymer and the copolymer are economical and easily processed and have excellent heat generation properties. As the aromatic vinyl-based resin, it is possible to use, for example, products commercially available from Kraton Corporation, Eastman Chemical Company, etc.

The "C5/C9 resin" refers to a resin obtained by copolymerization of the aforementioned C5 fraction and the aforementioned C9 fraction and may be a hydrogenated product or a modified product of the resin. Examples of the C5 fraction and the C9 fraction include the aforementioned petroleum fractions. As the C5/C9 resin, it is possible to use, for example, products commercially available from Tosoh Corporation, Zibo Luhua Hongjin New Material Co., Ltd. etc.

The acrylic-based resin is not particularly limited, and, for example, a solventless acrylic-based resin can be used.

Examples of the solventless acrylic-based resin include (meth)acrylic-based resins (polymers) synthesized by high-temperature continuous polymerization methods (high-temperature continuous bulk polymerization methods) (the methods described in US Patent No. 4,414,370, Japanese Laid-Open Patent Publication No. S59-6207, Japanese Examined Patent Publication No. H5-58005, Japanese Laid-Open Patent Publication No. H1-313522, US Patent No. 5,010,166, TREND 2000 (annual research report of Toagosei Co., Ltd.), No. 3, pages 42-45, and the like) by avoiding, as much as possible, use of a polymerization initiator, a chain transfer agent, an organic solvent, or the like which are sub-materials. In the present invention, (meth)acrylic means methacrylic and acrylic.

Examples of monomer components forming the above acrylic-based resin include (meth)acrylic acid and (meth)acrylic acid derivatives such as (meth)acrylic acid esters (alkyl (meth)acrylate, aryl (meth)acrylate, aralkyl (meth)acrylate, and the like), (meth)acrylamide, and (meth)acrylamide derivatives.

In addition, as the monomer components forming the above acrylic-based resin, an aromatic vinyl such as styrene, α-methylstyrene, vinyltoluene, vinylnaphthalene, divinylbenzene, trivinylbenzene, or divinylnaphthalene may be used together with the (meth)acrylic acid or the (meth)acrylic acid derivative.

The above acrylic-based resin may be a resin formed from only a (meth)acrylic component or may be a resin further containing, as a constituent element, a component in addition to the (meth)acrylic component. Moreover, the above acrylic-based resin may have a hydroxyl group, a carboxyl group, a silanol group, or the like.

As the resin component, it is possible to use, for example, products from Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd. etc.

(IV) Antioxidant

The rubber composition preferably contains an antioxidant. The amount of the antioxidant contained per 100 parts by mass of the rubber component is, for example, larger than 1 part by mass and smaller than 10 parts by mass.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; bis-, tris-, and poly-phenol-based antioxidants such as tetrakis-[methylene-3-(3',5'-di-t-butyl-4'-hydroxyphenyl)propionate]methane; and the like. These antioxidants may be used singly, or two or more of these antioxidants may be used in combination.

As the antioxidant, it is possible to use, for example, products from Seiko Chemical Co., Ltd., Sumitomo Chemical Co., Ltd., Ouchi Shinko Chemical Industrial Co., Ltd., Flexsys, etc.

(V) Stearic Acid

The rubber composition may contain stearic acid. The amount of the stearic acid contained per 100 parts by mass of the rubber component is, for example, larger than 0.5 parts by mass and smaller than 10.0 parts by mass. As the stearic acid, it is possible to use conventionally known stearic acids, e.g., products from NOF Corporation, Kao Corporation, FUJIFILM Wako Pure Chemical Industries, Ltd., New Japan Chemical Co., Ltd., etc.

(VI) Zinc Oxide

The rubber composition may contain zinc oxide. The amount of the zinc oxide contained per 100 parts by mass of the rubber component is, for example, larger than 0.5 parts by mass and smaller than 10 parts by mass. As the zinc oxide, it is possible to use conventionally known zinc oxides, e.g., products from Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co.,

Ltd., etc.

(VII) Wax

The rubber composition preferably contains a wax. The amount of the wax contained per 100 parts by mass of the rubber component is, for example, 0.5 to 20 parts by mass, preferably 1.0 to 15 parts by mass, and more preferably 1.5 to 10 parts by mass.

The wax is not particularly limited, and examples thereof include: petroleum-based waxes such as paraffin wax and microcrystalline wax; natural waxes such as vegetable-based wax and animal-based wax; synthesized waxes such as polymers of ethylene, propylene, and the like; and the like. These waxes may be used singly, or two or more of these waxes may be used in combination.

As the wax, it is possible to use, for example, products from Ouchi Shinko Chemical Industrial Co., Ltd., NIPPON SEIRO CO., LTD., Seiko Chemical Co., Ltd., etc.

(VIII) Crosslinking Agent and Vulcanization Accelerator

The rubber composition preferably contains a crosslinking agent such as a sulfur. The amount of the crosslinking agent contained per 100 parts by mass of the rubber component is, for example, larger than 0.1 parts by mass and smaller than 10.0 parts by mass.

Examples of the sulfur include powdery sulfur, precipitated sulfur, colloidal sulfur, insoluble sulfur, highly dispersible sulfur, soluble sulfur, and the like which are generally used in the rubber industry. These sulfurs may be used singly, or two or more of these sulfurs may be used in combination.

As the sulfur, it is possible to use, for example, products from Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc.

Examples of crosslinking agents other than sulfur include: vulcanizing agents containing sulfur atoms, such as TACKIROL V200 manufactured by Taoka Chemical Co., Ltd., DURALINK HTS (1,6-hexamethylene-sodium dithiosulfate dihydrate) manufactured by Flexsys, and KA9188 (1,6-bis(N,N'-dibenzylthiocarbamoyldithio)hexane: hybrid crosslinking agent) manufactured by LANXESS; organic peroxides such as dicumyl peroxide; and the like.

The rubber composition preferably contains a vulcanization accelerator. The amount of the vulcanization accelerator contained per 100 parts by mass of the rubber component is, for example, larger than 0.3 parts by mass and smaller than 10.0 parts by mass.

Examples of the vulcanization accelerator can include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used singly, or two or more of these vulcanization accelerators may be used in combination.

(IX) Others

In addition to the aforementioned components, additives generally used in the tire industry, e.g., fatty acid metal salts, carboxylic acid metal salts, organic peroxides, and the like may further be blended in the rubber composition. The amount of the additives contained per 100 parts by mass of the rubber component is, for example, larger than 0.1 parts by mass and smaller than 200 parts by mass.

(2) Production of Rubber Compositions

A tread rubber composition and a sidewall rubber composition are produced by a general method exemplified by a production method that includes: a base kneading step of kneading a rubber component and a filler such as carbon black; and a finish kneading step of kneading a crosslinking agent and a kneaded product obtained in the base kneading step.

The kneading can be performed by using, for example, a known (sealed-type) kneading machine such as a Banbury mixer or a kneader, or a known open roll.

In the base kneading step, the kneading temperature is, for example, higher than 50°C and lower than 200°C, and the kneading time is, for example, longer than 30 seconds and shorter than 30 minutes. In the base kneading step,

ingredients conventionally used in the rubber industry, e.g., a softener such as oil, stearic acid, zinc oxide, an antioxidant, a wax, a vulcanization accelerator, and the like may be appropriately added and kneaded as necessary in addition to the above components.

In the finish kneading step, the crosslinking agent and the kneaded product obtained in the base kneading step are kneaded. In the finish kneading step, the kneading temperature is, for example, higher than room temperature and lower than 80°C, and the kneading time is, for example, longer than 1 minute and shorter than 15 minutes. In the finish kneading step, a vulcanization accelerator, zinc oxide, and the like may be appropriately added and kneaded as necessary in addition to the above components.

2. Manufacturing of Tire

The tire according to the present embodiment is manufactured by an ordinary method by using unvulcanized rubber compositions obtained through the finish kneading step. Specifically, the tread rubber composition (a cap tread composition and a base tread composition) and the sidewall rubber composition are used, and these unvulcanized rubber compositions are extruded into the shapes of a cap rubber, a base rubber, and sidewall rubbers respectively, and these extruded rubbers are shaped on a tire shaping machine by an ordinary method together with other tire members. Consequently, an unvulcanized tire is manufactured first.

More specifically, an inner liner as a member for ensuring the airtightness of the tire, a carcass as a member for withstanding load, impact, and filling air pressure received by the tire, a belt as a member for firmly tightening the carcass to enhance the rigidity of the tread, and the like are wound on a shaping drum, bead portions as members for fixing, to both side edge portions thereof, both ends of the carcass and fixing the tire on a rim are disposed, and these members are shaped into a toroidal shape. Then, a tread is attached to a center portion of the outer circumference, and side portions (sidewalls and clinch portions) as members for protecting the carcass to withstand bending are attached on the radially outer side. Consequently, an unvulcanized tire is manufactured.

In the present embodiment, a tilted belt layer extending so as to be tilted at an angle of 15° to 30° with respect to a tire circumferential direction is preferably provided as the belt. This tilted belt layer makes it possible to ensure the durability of the tire and to sufficiently maintain the rigidity of the tread. In addition, the tilted belt layer enables fastening in the circumferential direction, whereby increase in the outer diameter is easily suppressed.

Thereafter, the manufactured unvulcanized tire is heated and pressurized in a vulcanizing machine, whereby a tire is obtained. The vulcanizing step can be performed by applying known vulcanization means. The vulcanization temperature is, for example, higher than 120°C and lower than 200°C, and the vulcanization time is, for example, longer than 5 minutes and shorter than 15 minutes.

The tire according to the present embodiment is particularly preferably applied to pneumatic tires for passenger cars designed for use in summer. With such application, the tire can more suitably contribute to solving the problem addressed in the present invention, i.e., the problem of providing a pneumatic tire which has excellent durability and in which sufficient achievement of both improvement in low fuel consumption performance and reduction in road noise has been realized.

## EXAMPLES

Hereinafter, the present invention will be further specifically described by means of examples.

[1] Production of Rubber Compositions

1. Tread Rubber Compositions

First, tread rubber compositions were produced.

(1) Blending Materials

First, blending materials described below were prepared.

(a) Rubber Components

(I) NR: TSR20
(II) BR-1: UBEPOL-BR150B manufactured by Ube Industries, Ltd.

(cis content: 97% by mass)
(III) BR-2: Nipol-BR1250H manufactured by Zeon Corporation
(a BR having a terminal modified with tin, cis content: 40% by mass)
(IV) BR-3: UBEPOL VCR617 manufactured by Ube Industries, Ltd.
(cis content: 98% by mass)
(V) SBR: Europrene SOL R C2525 manufactured by Versalis S.p.A.
(styrene content: 26% by mass, vinyl bond content: 24% by mass)

(b) Blending Materials Other Than Rubber Components

(I) Carbon black: SHOBLACK N330T manufactured by Cabot Japan K.K. (DOP absorption amount: 104 ml/100 g)
(II) Silica: ULTRASIL VN3 manufactured by Evonik Industries Ag.
(III) Silane coupling agent: Si363 manufactured by Evonik Industries Ag.
(IV) Resin component: PR12686 manufactured by Sumitomo Bakelite Co., Ltd. (cashew-oil-modified phenol resin)
(V) Curing agent: SUMIKANOL 507 manufactured by Taoka Chemical Co., Ltd.
(VI) Oil: Process X-140 manufactured by ENEOS Corporation
(VII) Stearic acid: stearic acid "Tsubaki" manufactured by NOF Corporation
(VIII) Zinc oxide: Zinc Oxide Type-1 manufactured by Mitsui Mining & Smelting Co., Ltd.
(IX) Wax: SUNNOC WAX manufactured by Ouchi Shinko Chemical Industrial Co., Ltd.
(X) Antioxidant-1: NOCRAC 6C manufactured by Ouchi Shinko Chemical Industrial Co., Ltd.
(N-phenyl-N'-(1,3-dimethylbutyl)-p-phenylenediamine)
(XI) Antioxidant-2: ANTAGE RD manufactured by Kawaguchi Chemical Industry Co., Ltd.
(2,2,4-trimethyl-1,2-dihydroquinoline)
(XII) Crosslinking agent and vulcanization accelerators

Sulfur: powdery sulfur manufactured by Tsurumi Chemical Industry Co., Ltd.
Vulcanization accelerator-1: NOCCELER NS manufactured by Ouchi Shinko Chemical Industrial Co., Ltd.
(N-tert-butyl-2-benzothiazolyl sulfenamide)
Vulcanization accelerator-2: NOCCELER CZ-G (CZ) manufactured by Ouchi Shinko Chemical Industrial Co., Ltd.
(N-cyclohexyl-2-benzothiazolyl sulfenamide)
Vulcanization accelerator-3: NOCCELER D (DPG) manufactured by Ouchi Shinko Chemical Industrial Co., Ltd.
(1,3-diphenylguanidine)

(2) Production of Rubber Compositions

A cap rubber composition was made according to each formula indicated in Table 1, and a base rubber composition was made according to each formula indicated in Table 2. In each making, the materials other than the sulfur and the vulcanization accelerators were kneaded for 5 minutes under a condition of 150°C by using a Banbury mixer, whereby a kneaded product was obtained. Thereafter, the sulfur and the vulcanization accelerators were added to the kneaded product, and the mixture was kneaded for 5 minutes under a condition of 80°C by using an open roll. Consequently, cap rubber compositions and base rubber compositions were obtained. The unit of each blending amount is parts by mass.

[Table 1]

| Ingredients | A | B | C | D | E |
|---|---|---|---|---|---|
| BR-1 | 15 | 10 | 20 | 15 | 5 |
| SBR | 85 | 90 | 80 | 85 | 65 |
| NR | | | | | 30 |
| Carbon black | 5 | 5 | 5 | 5 | 5 |
| Silica | 80 | 80 | 80 | 70 | 70 |
| Silane coupling agent | 8 | 8 | 8 | 7 | 7 |

(continued)

| Ingredients | A | B | C | D | E |
|---|---|---|---|---|---|
| Oil | 5 | 5 | 5 | 5 | 5 |
| Stearic acid | 2 | 2 | 2 | 2 | 2 |
| Zinc oxide | 2 | 2 | 2 | 2 | 2 |
| Wax | 2 | 2 | 2 | 2 | 2 |
| Antioxidant-1 | 2 | 2 | 2 | 2 | 2 |
| Sulfur | 1.5 | 1.5 | 1.5 | 1.5 | 1.5 |
| Vulcanization accelerator-1 | 1.5 | 1.5 | 1.5 | 1.5 | 1.5 |
| Vulcanization accelerator-3 | 1 | 1 | 1 | 1 | 1 |
| Ec* (MPa) | 9.6 | 10.0 | 9.1 | 7.5 | 7.7 |
| tanδc | 0.17 | 0.18 | 0.15 | 0.15 | 0.17 |

[Table 2]

| Ingredients | a | b | c | d | e |
|---|---|---|---|---|---|
| NR | 60 | 60 | 60 | 60 | 70 |
| BR-1 | | | 20 | | 30 |
| BR-2 | 20 | 20 | | 20 | |
| BR-3 | 20 | 20 | 20 | 20 | |
| Carbon black | 40 | 30 | 30 | 20 | 35 |
| Silica | | 15 | 15 | 30 | |
| Silane coupling agent | | 1.2 | 1.2 | 2.4 | |
| Resin component | 10 | 15 | 10 | 10 | |
| Curing agent | 3 | 5 | 3 | 3 | |
| Stearic acid | 2 | 2 | 2 | 2 | 2 |
| Zinc oxide | 5 | 5 | 5 | 5 | 4 |
| Wax | 2 | 2 | 2 | 2 | 2 |
| Antioxidant-1 | 3 | 3 | 3 | 3 | 3 |
| Antioxidant-2 | 1 | 1 | 1 | 1 | 1 |
| Sulfur | 2.8 | 2.8 | 2.8 | 2.8 | 1.7 |
| Vulcanization accelerator-2 | 1.5 | 1.5 | 1.5 | 1.5 | 1.2 |
| Vulcanization accelerator-3 | 1 | 1 | 1 | 1 | |
| Eb* (MPa) | 6.5 | 7.7 | 6.5 | 5.5 | 4.8 |
| tanδb | 0.06 | 0.07 | 0.05 | 0.10 | 0.07 |

2. Production of Sidewall Rubber Compositions

Next, sidewall rubber compositions were produced.

(1) Blending Materials

First, blending materials described below were prepared.

(a) Rubber Components

(I) NR: TSR20
(II) BR-1: UBEPOL-BR150B manufactured by Ube Industries, Ltd.
(cis content: 97% by mass)
(III) BR-2: Nipol-BR1250H manufactured by Zeon Corporation
(a BR having a terminal modified with tin, cis content: 40% by mass)
(IV) BR-3: UBEPOL VCR617 manufactured by Ube Industries, Ltd.
(cis content: 98% by mass)

(b) Blending Materials Other Than Rubber Components

(I) Carbon black-1: SHOBLACK N550 manufactured by Cabot Japan K.K. (DOP absorption amount: 115 ml/100 g)
(II) Carbon black-2: SHOBLACK N330T manufactured by Cabot Japan K.K. (DOP absorption amount: 104 ml/100 g)
(III) Oil: Process X-140 manufactured by ENEOS Corporation
(IV) Stearic acid: stearic acid "Tsubaki" manufactured by NOF Corporation
(V) Zinc oxide: Zinc Oxide Type-1 manufactured by Mitsui Mining & Smelting Co., Ltd.
(VI) Wax: SUNNOC WAX manufactured by Ouchi Shinko Chemical Industrial Co., Ltd.
(VII) Antioxidant-1: NOCRAC 6C manufactured by Ouchi Shinko Chemical Industrial Co., Ltd.
(N-phenyl-N'-(1,3-dimethylbutyl)-p-phenylenediamine)
(VIII) Antioxidant-2: ANTAGE RD manufactured by Kawaguchi Chemical Industry Co., Ltd.
(2,2,4-trimethyl-1,2-dihydroquinoline)
(IX) Crosslinking agent and vulcanization accelerator

Sulfur: powdery sulfur manufactured by Tsurumi Chemical Industry Co., Ltd.
Vulcanization accelerator: NOCCELER NS manufactured by Ouchi Shinko Chemical Industrial Co., Ltd.
(N-tert-butyl-2-benzothiazolyl sulfenamide)

(2) Production of Sidewall Rubber Compositions

According to each blending formula indicated in Table 3, the materials other than the sulfur and the vulcanization accelerator were kneaded for 5 minutes under a condition of 150°C by using a Banbury mixer, whereby a kneaded product was obtained. The unit of each blending amount is parts by mass.

Thereafter, the sulfur and the vulcanization accelerator were added to the obtained kneaded product, and the mixture was kneaded for 5 minutes under a condition of 80°C by using an open roll. Consequently, sidewall rubber compositions based on the respective four types of formulas A to D indicated in Table 3 were obtained.

[Table 3]

| Ingredients | Formula A | Formula B | Formula C | Formula D |
|---|---|---|---|---|
| NR | 40 | 40 | 40 | 40 |
| BR-1 | 60 | 60 | 60 | |
| BR-2 | | | | 30 |
| BR-3 | | | | 30 |
| Carbon black-1 | 60 | 75 | 65 | 45 |
| Oil | 15 | 25 | 15 | 15 |
| Stearic acid | 3 | 3 | 3 | 3 |
| Zinc oxide | 4.5 | 4.5 | 4.5 | 4.5 |
| Wax | 2 | 2 | 2 | 2 |
| Antioxidant-1 | 4.5 | 4.5 | 4.5 | 4.5 |

(continued)

| Ingredients | Formula A | Formula B | Formula C | Formula D |
|---|---|---|---|---|
| Antioxidant-2 | 2 | 2 | 2 | 2 |
| Sulfur | 1.9 | 1.9 | 1.9 | 1.9 |
| Vulcanization accelerator | 0.9 | 1.4 | 1.2 | 1.2 |
| tanδs | 0.20 | 0.19 | 0.15 | 0.08 |

[2] Manufacturing of Tires

(1) Manufacturing of Tires

The cap rubber compositions and the base rubber compositions obtained as above were used to make tread rubbers each having a two-layer structure and a predetermined shape, and the sidewall rubber compositions obtained as above were used to make sidewall rubbers each having a predetermined shape. Then, according to each of the combinations indicated in Table 4 and Table 5, the tread rubber and the sidewall rubber were attached together with the other tire members, and an unvulcanized tire was formed. The unvulcanized tire was press-vulcanized for 10 minutes under a condition of 170°C, whereby a test tire having a size of 195/40R20 was manufactured. In each test tire, sipes connecting both side portions of circumferential land portions to each other were formed so as to be tilted at an angle of 20° with respect to the width direction of the test tire. Further, in a ground contact surface of the test tire, the area of a groove portion other than circumferential groove portions was set to be smaller than the total area of the circumferential groove portions. Specifically, the area was set to be 80% of the total area of the circumferential groove portions.

(2) Calculation of Parameters

Thereafter, a circumferential groove portion area proportion (%) (the proportion of the area formed by the circumferential groove portions to the total ground contact area) in each test tire was obtained. Along with this, rubber test pieces for measuring viscoelasticity were made by cutting the tread portion (the cap rubber and the base rubber) and either of the sidewall portions of each test tire into pieces each having a length of 20 mm, a width of 4 mm, and a thickness of 2 mm such that the direction of each of the long sides of the rubber test pieces is the tire circumferential direction. Measurements were performed on the rubber test pieces by using EPLEXOR series manufactured by NETZSCH-Gerätebau GmbH. Specifically, under a condition of a temperature of 30°C, a frequency of 10 Hz, an initial strain of 5%, and a dynamic strain of 1%, the tanδ of each rubber test piece was measured with a deformation mode being a tension mode, and the E* (Eb* and Ec*) of rubber test pieces that had been cut out of the tread portion among the rubber test pieces were measured with the deformation mode being a stretching mode. The values of tanδb/tanδs and Eb*/Ec* were obtained from the results of the measurements. The tire radial direction was regarded as the thickness direction of each rubber test piece. The results are indicated in Table 4 and Table 5.

(3) Performance Evaluation Tests

(a) Evaluation of Low Rolling Resistance Performance (during High-Speed Running)

Each set of test tires was mounted on all the wheels of a vehicle (a front-wheel drive vehicle made in Japan and having an engine displacement of 2000 cc). The test tires were filled with air such that the internal pressures thereof were 250 kPa. Then, the vehicle was caused to run on a round test course with a dry road surface at a speed of 100 km/h for 10 km. Thereafter, the accelerator was released, and the distance run from the timing at which the accelerator was released to the timing at which the vehicle stopped, was measured as a rolling resistance.

Next, the measurement result was converted into an index on the basis of the following expression with the result of Comparative Example 1 being regarded as 100, and the low rolling resistance performance was evaluated relatively. A larger numerical value indicates that: the distance run from the timing at which the accelerator was released to the timing at which the vehicle stopped, is longer; the rolling resistance in a steady state is lower; and the low fuel consumption performance is better.

$$\text{Low rolling resistance performance} = [(\text{measurement result of test tire})/(\text{measurement result of Comparative Example 1})] \times 100$$

(b) Evaluation of Durability

Each set of test tires was mounted on all the wheels of a vehicle (a front-wheel drive vehicle made in Japan and having an engine displacement of 2000 cc). The test tires were filled with air such that the internal pressures thereof were 250 kPa. Then, in an overloaded state, the vehicle was caused to run ten laps on a test course with a dry road surface at a speed of 50 km/h and repetitively performed a motion of, at a speed of 80 km/h, running over recesses and projections provided to the road surface. Then, the vehicle was caused to run around the test course at a speed of 50 km/h again. Thereafter, the speed was gradually increased, and a speed at which the driver had noticed an abnormality was measured.

Next, the measurement result was converted into an index on the basis of the following expression with the result of Comparative Example 1 being regarded as 100, and the durability was evaluated relatively. A larger numerical value indicates a better durability.

$$\text{Durability} = [(\text{measurement result of test tire})/(\text{measurement result of Comparative Example 1})] \times 100$$

(c) Evaluation of Road Noise Reduction Performance

Each set of test tires was mounted on all the wheels of vehicles (front-wheel drive vehicles made in Japan and each having an engine displacement of 2000 cc). The test tires were filled with air such that the internal pressures of the front wheels were 230 kPa and the internal pressures of the rear wheels were 220 kPa. Then, the vehicles were caused to run on a test course with a dry road surface at a speed of 60 km/h, and a sensory inspection about noise heard over the window was made by each driver, with the maximum score being 5.

The results of the evaluations made by 20 drivers were summed. Then, the sum was converted into an index with the total score of Comparative Example 1 being regarded as 100, and a multiplicative inverse of the index was used to make evaluation. A larger numerical value indicates better road noise reduction.

$$\text{Road noise reduction performance} = [(\text{evaluation score of Comparative Example 1})/(\text{evaluation score of test tire})] \times 100$$

(d) Overall Evaluation

The results of the above evaluations (1) to (3) were summed, and the sum was used for overall evaluation.

(4) Results of Evaluations

The results of the respective evaluations are indicated in Table 4 and Table 5.

[Table 4]

| | Ex. 1 | Ex. 2 | Ex. 3 | Ex. 4 | Ex. 5 | Ex. 6 | Ex. 7 |
|---|---|---|---|---|---|---|---|
| (Combination) | | | | | | | |
| Cap rubber | B | A | C | E | B | B | C |
| Base rubber | b | e | d | a | a | e | b |
| Sidewall rubber | C | D | C | B | D | A | C |
| (Parameter) | | | | | | | |
| tanδb | 0.07 | 0.07 | 0.1 | 0.06 | 0.06 | 0.07 | 0.07 |

(continued)

| (Parameter) | | | | | | | |
|---|---|---|---|---|---|---|---|
| tanδs | 0.15 | 0.08 | 0.15 | 0.19 | 0.08 | 0.2 | 0.15 |
| tanδc | 0.18 | 0.17 | 0.15 | 0.17 | 0.18 | 0.18 | 0.15 |
| Eb* (MPa) | 7.7 | 4.8 | 5.5 | 6.5 | 6.5 | 4.8 | 7.7 |
| Ec* (MPa) | 10 | 9.6 | 9.1 | 7.7 | 10 | 10 | 9.1 |
| tanδb/tanδs | 0.47 | 0.88 | 0.67 | 0.32 | 0.75 | 0.35 | 0.47 |
| tanδc/tanδb | 2.57 | 2.43 | 1.50 | 2.83 | 3.00 | 2.57 | 2.14 |
| Eb*/Ec* | 0.77 | 0.50 | 0.60 | 0.84 | 0.65 | 0.48 | 0.85 |
| Circumferential groove portion area proportion (%) | 18 | 16 | 15 | 27 | 30 | 29 | 25 |
| (Evaluation result) | | | | | | | |
| Low rolling resistance performance | 110 | 120 | 115 | 110 | 108 | 110 | 105 |
| Durability | 114 | 113 | 110 | 111 | 113 | 108 | 110 |
| Road noise reduction performance | 117 | 111 | 108 | 109 | 103 | 118 | 115 |
| Overall evaluation | 341 | 344 | 333 | 330 | 324 | 336 | 330 |

[Table 5]

| | Ex. 8 | Ex. 9 | Ex. 10 | Comp. Ex. 1 | Comp. Ex. 2 | Comp. Ex. 3 | Comp. Ex. 4 |
|---|---|---|---|---|---|---|---|
| (Combination) | | | | | | | |
| Cap rubber | E | A | D | E | A | B | E |
| Base rubber | c | d | b | d | b | b | d |
| Sidewall rubber | D | A | C | D | C | B | D |
| (Parameter) | | | | | | | |
| tanδb | 0.05 | 0.1 | 0.07 | 0.1 | 0.07 | 0.07 | 0.1 |
| tanδs | 0.08 | 0.2 | 0.15 | 0.08 | 0.15 | 0.19 | 0.08 |
| tanδc | 0.17 | 0.17 | 0.15 | 0.17 | 0.17 | 0.18 | 0.17 |
| Eb* (MPa) | 6.5 | 5.5 | 7.7 | 5.5 | 7.7 | 7.7 | 5.5 |
| Ec* (MPa) | 7.7 | 9.6 | 7.5 | 7.7 | 9.6 | 10 | 7.7 |
| tanδb/tanδs | 0.63 | 0.50 | 0.47 | 1.25 | 0.47 | 0.37 | 1.25 |
| tanδc/tanδb | 3.40 | 1.70 | 2.14 | 1.70 | 2.43 | 2.57 | 1.70 |
| Eb*/Ec* | 0.84 | 0.57 | 1.03 | 0.71 | 0.80 | 0.77 | 0.71 |
| Circumferential groove portion area proportion (%) | 22 | 15 | 15 | 16 | 14 | 34 | 30 |
| (Evaluation result) | | | | | | | |
| Low rolling resistance performance | 108 | 108 | 106 | 100 | 90 | 81 | 83 |
| Durability | 105 | 116 | 108 | 100 | 95 | 96 | 92 |
| Road noise reduction performance | 115 | 114 | 106 | 100 | 89 | 94 | 94 |
| Overall evaluation | 328 | 338 | 320 | 300 | 274 | 271 | 269 |

From Table 4 and Table 5, it is found that, if the circumferential groove portion area proportion is 15 to 30% and tanδb/tanδs<1 is satisfied, excellent durability is obtained and sufficient achievement of both improvement in low fuel consumption performance and reduction in road noise is realized.

In addition, it is found that, if 1.3≤(tanδc/tanδb)<3.0 is satisfied, excellent durability is obtained and sufficient achievement of both improvement in low fuel consumption performance and reduction in road noise is realized.

Further, it is found that, if Eb*/Ec*< 1 is satisfied, excellent durability is obtained and sufficient achievement of both improvement in low fuel consumption performance and reduction in road noise is realized.

Furthermore, it is found that, if a circumferential groove portion cross-sectional area proportion is not lower than 10% and lower than 30%, excellent durability is obtained and sufficient achievement of both improvement in low fuel consumption performance and reduction in road noise is realized. Moreover, it is found that, if a land portion area proportion is 30 to 60%, more excellent performances are achieved.

Although the present invention has been described based on the embodiment, the present invention is not limited to the above embodiment. Various modifications of the above embodiment can be made within the scope identical or equivalent to that of the present invention.

## Claims

1. A pneumatic tire comprising:

   a tread portion having a tread rubber forming an outer surface; and
   sidewall portions each having a sidewall rubber forming an outer surface, wherein
   the tread rubber includes

      a cap rubber having an outer surface portion on which a ground contact surface is formed by a plurality of circumferential groove portions and a plurality of circumferential land portions, and
      a base rubber disposed inward of the cap rubber in a tire radial direction so as to extend to each sidewall portion, **characterised in that** the pneumatic tire further comprises:

   in the ground contact surface, an area formed by the circumferential groove portions is 15 to 30% of a total ground contact area, and
   a loss tangent (tanδb) of the base rubber and a loss tangent (tanδs) of the sidewall rubber which are measured under a condition of a temperature of 30°C, a frequency of 10 Hz, an initial strain of 5%, and a dynamic strain of 1% with a deformation mode being a tension mode, satisfy the following (expression 1),

$$(\tan\delta b/\tan\delta s)<1 \cdots \text{(expression 1)}.$$

2. The pneumatic tire according to claim 1, wherein
   a total cross-sectional area of the plurality of circumferential groove portions is not lower than 10% and lower than 30% of a cross-sectional area of the tread portion.

3. The pneumatic tire according to claim 1 or 2, wherein
   a loss tangent (tanδc) of the cap rubber and the loss tangent (tanδb) of the base rubber which are measured under the condition of a temperature of 30°C, a frequency of 10 Hz, an initial strain of 5%, and a dynamic strain of 1% with the deformation mode being the tension mode, satisfy the following (expression 2),

$$1.3\leq(\tan\delta c/\tan\delta b)<3.0 \cdots \text{(expression 2)}.$$

4. The pneumatic tire according to any one of claims 1 to 3, wherein
   a loss tangent (tanδc) of the cap rubber, the loss tangent (tanδb) of the base rubber, and the loss tangent (tanδs) of the sidewall rubber which are measured under the condition of a temperature of 30°C, a frequency of 10 Hz, an initial strain of 5%, and a dynamic strain of 1% with the deformation mode being the tension mode, satisfy the following (expression 3),

$$\tan\delta b<\tan\delta s<\tan\delta c \cdots \text{(expression 3)}.$$

**5.** The pneumatic tire according to any one of claims 1 to 4, wherein a complex elastic modulus Eb* of the base rubber and a complex elastic modulus Ec* of the cap rubber which are measured under a condition of a temperature of 30°C, a frequency of 10 Hz, an initial strain of 5%, and a dynamic strain of 1% with the deformation mode being a stretching mode, satisfy the following (expression 4),

$$Eb^*/Ec^* < 1 \cdots \text{(expression 4)}.$$

**6.** The pneumatic tire according to any one of claims 1 to 5, wherein

a groove portion other than the circumferential groove portions is formed in a surface portion of the tread portion, and
in the ground contact surface, an area of the groove portion other than the circumferential groove portions is smaller than a total area of the circumferential groove portions.

**7.** The pneumatic tire according to any one of claims 1 to 6, wherein if the ground contact surface is divided into four equal regions in a tire width direction, a total area value obtained by subtracting areas of grooves in two inner-side regions among the four regions from a total area of the two inner-side regions is 30 to 60% of an area obtained by subtracting areas of grooves in an entirety of the ground contact surface from an area of the entirety of the ground contact surface.

**8.** The pneumatic tire according to any one of claims 1 to 7, wherein

if the ground contact surface is divided into four equal regions in a tire width direction, a circumferential land portion that is included among the plurality of circumferential land portions and that is located in a region closest to a tire equator among the four regions has a sipe formed so as to connect both side portions of the circumferential land portion to each other, and
a straight line connecting both end portions of the sipe to each other is tilted by 15 to 25° with respect to the width direction.

**9.** The pneumatic tire according to any one of claims 1 to 8, wherein if the ground contact surface is divided into four equal regions in a tire width direction, a proportion of a total area of circumferential groove portions that are included among the plurality of circumferential groove portions and that are located in two inner-side regions among the four regions to a total area of the two inner-side regions is lower than a proportion of a total area of circumferential groove portions that are included among the plurality of circumferential groove portions and that are located in two outer-side regions among the four regions to a total area of the two outer-side regions.

**10.** The pneumatic tire according to any one of claims 1 to 9, wherein the tread rubber is formed from a rubber composition containing a styrene-butadiene rubber and/or a butadiene rubber as a rubber component.

**11.** The pneumatic tire according to claim 10, wherein the tread rubber is formed from the rubber composition further containing not smaller than 50 parts by mass of a silica per 100 parts by mass of the rubber component.

**12.** The pneumatic tire according to any one of claims 1 to 11, wherein the sidewall rubber is formed from a rubber composition containing an isoprene-based rubber and a butadiene rubber as rubber components.

**13.** The pneumatic tire according to claim 12, wherein the sidewall rubber is formed from the rubber composition further containing not smaller than 50 parts by mass of a carbon black per 100 parts by mass of the rubber components.

**14.** The pneumatic tire according to any one of claims 1 to 13, wherein the pneumatic tire is a pneumatic tire for passenger cars.

## Patentansprüche

1. Luftreifen, umfassend:

    einen Laufstreifenabschnitt, welcher einen Laufstreifenkautschuk aufweist, der eine äußere Oberfläche bildet; und
    Seitenwandabschnitte, die jeweils einen Seitenwandkautschuk aufweisen, der eine äußere Oberfläche bildet, wobei
    der Laufstreifenkautschuk

        einen Deckkautschuk, der einen äußeren Oberflächenabschnitt aufweist, auf dem durch eine Mehrzahl an Umfangsrillenabschnitten und eine Mehrzahl an Umfangspositivprofilabschnitten eine Bodenkontaktoberfläche gebildet ist, und
        einen Basiskautschuk, der in einer Reifenradialrichtung innerhalb des Deckkautschuks so angeordnet ist, dass er sich zu

    jedem Seitenwandabschnitt erstreckt, enthält,

    **dadurch gekennzeichnet, dass** der Luftreifen zudem umfasst:

    in der Bodenkontaktoberfläche eine durch die Umfangsrillenabschnitte gebildete Fläche 15 bis 30% einer gesamten Bodenkontaktfläche beträgt, und
    ein Verlusttangens (tanδb) des Basiskautschuks und ein Verlusttangens (tanδs) des Seitenwandkautschuks, die unter Bedingungen einer Temperatur von 30°C, einer Frequenz von 10 Hz, einer Anfangsdehnung von 5% und einer dynamischen Dehnung von 1%, wobei ein Verformungsmodus ein Spannmodus ist, gemessen sind, dem folgenden (Ausdruck 1) genügen,

$$(\tan\delta b/\tan\delta s)<1 \cdots (\text{Ausdruck } 1).$$

2. Luftreifen nach Anspruch 1, wobei
eine gesamte Querschnittsfläche der Mehrzahl an Umfangsrillenabschnitten nicht weniger als 10% und weniger als 30% einer Querschnittsfläche des Laufstreifenabschnitts beträgt.

3. Luftreifen nach Anspruch 1 oder 2, wobei
ein Verlusttangens (tanδc) des Deckkautschuks und der Verlusttangens (tanδb) des Basiskautschuks, die unter den Bedingungen einer Temperatur von 30°C, einer Frequenz von 10 Hz, einer Anfangsdehnung von 5% und einer dynamischen Dehnung von 1%, wobei der Verformungsmodus der Spannmodus ist, gemessen sind, dem folgenden (Ausdruck 2) genügen,

$$1{,}3\leq(\tan\delta c/\tan\delta b)<3{,}0 \cdots (\text{Ausdruck } 2).$$

4. Luftreifen nach einem der Ansprüche 1 bis 3, wobei
ein Verlusttangens (tanδc) des Deckkautschuks, der Verlusttangens (tanδb) des Basiskautschuks und der Verlusttangens (tanδs) des Seitenwandkautschuks, die unter den Bedingungen einer Temperatur von 30°C, einer Frequenz von 10 Hz, einer Anfangsdehnung von 5% und einer dynamischen Dehnung von 1%, wobei der Verformungsmodus der Spannmodus ist, gemessen sind, dem folgenden (Ausdruck 3) genügen,

$$\tan\delta b<\tan\delta s<\tan\delta c \cdots (\text{Ausdruck } 3).$$

5. Luftreifen nach einem der Ansprüche 1 bis 4, wobei
ein komplexer Elastizitätsmodul Eb* des Basiskautschuks und ein komplexer Elastizitätsmodul Ec* des Deckkautschuks, die unter Bedingungen einer Temperatur von 30°C, einer Frequenz von 10 Hz, einer Anfangsdehnung von 5% und einer dynamischen Dehnung von 1%, wobei der Verformungsmodus ein Streckmodus ist, gemessen sind, dem folgenden (Ausdruck 4) genügen,

$$Eb^*/Ec^*<1 \cdots \text{(Ausdruck 4)}.$$

6. Luftreifen nach einem der Ansprüche 1 bis 5, wobei

   in einem Oberflächenabschnitt des Laufstreifenabschnitts ein von den Umfangsrillenabschnitten verschiedener Rillenabschnitt gebildet ist, und
   in der Bodenkontaktoberfläche eine Fläche des von den Umfangsrillenabschnitten verschiedenen Rillenabschnitts kleiner ist als eine gesamte Fläche der Umfangsrillenabschnitte.

7. Luftreifen nach einem der Ansprüche 1 bis 6, wobei,
   wenn die Bodenkontaktoberfläche in einer Reifenbreitenrichtung in vier gleiche Bereiche unterteilt ist, ein Gesamtflächenwert, der durch Subtrahieren von Rillenflächen in zwei innenseitigen Bereichen der vier Bereiche von einer Gesamtfläche der zwei innenseitigen Bereiche erhalten ist, 30 bis 60% einer Fläche beträgt, die durch Subtrahieren von Rillenflächen in einer Gesamtheit der Bodenkontaktoberfläche von einer Fläche der Gesamtheit der Bodenkontaktoberfläche erhalten ist.

8. Luftreifen nach einem der Ansprüche 1 bis 7, wobei,

   wenn die Bodenkontaktoberfläche in einer Reifenbreitenrichtung in vier gleiche Bereiche unterteilt ist, ein Umfangspositivprofilabschnitt, der in der Mehrzahl an Umfangspositivprofilabschnitten enthalten ist und der sich in einem Bereich befindet, der sich von den vier Bereichen am nächsten an einem Reifenäquator befindet, einen Einschnitt aufweist, der so ausgebildet ist, dass er beide Seitenabschnitte des Umfangspositivprofilabschnitts miteinander verbindet, und
   eine Gerade, die beide Endabschnitte des Einschnitts miteinander verbindet, bezüglich der Breitenrichtung um 15 bis 25° geneigt ist.

9. Luftreifen nach einem der Ansprüche 1 bis 8, wobei,
   wenn die Bodenkontaktoberfläche in einer Reifenbreitenrichtung in vier gleiche Bereiche unterteilt ist, ein Verhältnis einer Gesamtfläche von Umfangsrillenabschnitten, die in der Mehrzahl an Umfangsrillenabschnitten enthalten sind und die sich in zwei innenseitigen Bereichen der vier Bereiche befinden, zu einer Gesamtfläche der zwei innenseitigen Bereiche niedriger ist als ein Verhältnis einer Gesamtfläche von Umfangsrillenabschnitten, die in der Mehrzahl an Umfangsrillenabschnitten enthalten sind und die sich in zwei außenseitigen Bereichen der vier Bereiche befinden, zu einer Gesamtfläche der zwei außenseitigen Bereiche.

10. Luftreifen nach einem der Ansprüche 1 bis 9, wobei
    der Laufstreifenkautschuk mit einer Kautschukzusammensetzung gebildet ist, die einen Styrol-Butadien-Kautschuk und/oder einen Butadienkautschuk als eine Kautschukkomponente enthält.

11. Luftreifen nach Anspruch 10, wobei
    der Laufstreifenkautschuk mit der Kautschukzusammensetzung gebildet ist, die zudem nicht weniger als 50 Massenteile eines Siliciumdioxids pro 100 Massenteile der Kautschukkomponente enthält.

12. Luftreifen nach einem der Ansprüche 1 bis 11, wobei
    der Seitenwandkautschuk mit einer Kautschukzusammensetzung gebildet ist, die einen Isopren-basierten Kautschuk und einen Butadienkautschuk als Kautschukkomponenten enthält.

13. Luftreifen nach Anspruch 12, wobei
    der Seitenwandkautschuk mit der Kautschukzusammensetzung gebildet ist, die zudem nicht weniger als 50 Massenteile eines Rußes pro 100 Massenteile der Kautschukkomponenten enthält.

14. Luftreifen nach einem der Ansprüche 1 bis 13, wobei
    der Luftreifen ein Luftreifen für Personenkraftwagen ist.

**Revendications**

1. Bandage pneumatique comprenant :

une portion formant bande de roulement ayant un caoutchouc de bande de roulement formant une surface extérieure ; et
des portions formant parois latérales ayant chacune un caoutchouc de parois latérales formant une surface extérieure, dans lequel
le caoutchouc de bande de roulement inclut
un caoutchouc de chape ayant une portion de surface extérieure sur laquelle une surface de contact au sol est formée par une pluralité de portions de rainures circonférentielles et une pluralité de portions en relief circonférentielles, et
un caoutchouc de base disposé à l'intérieur du caoutchouc de chape dans une direction radiale du pneumatique de manière à s'étendre jusqu'à chaque portion formant paroi latérale,
**caractérisé en ce que** le bandage pneumatique comprend en outre :

dans la surface de contact au sol, une aire formée par les portions de rainures circonférentielles qui représente 15 à 30 % d'une aire totale de contact au sol, et
une tangente de perte (tanδb) du caoutchouc de base et une tangente de perte (tanδs) du caoutchouc de parois latérales qui sont mesurées sous une condition d'une température de 30 °C, d'une fréquence de 10 Hz, d'une contrainte initiale de 5 % et d'une contrainte dynamique de 1 %, un mode de déformation étant un mode en traction, satisfont l'(expression 1) suivante :

$$(\tan\delta b/\tan\delta s) < 1 \quad \text{(expression 1).}$$

**2.** Bandage pneumatique selon la revendication 1, dans lequel une aire de section transversale totale de la pluralité de portions de rainures circonférentielles n'est pas inférieure à 10 % et est inférieure à 30 % d'une aire de section transversale de la portion formant bande de roulement.

**3.** Bandage pneumatique selon la revendication 1 ou 2, dans lequel une tangente de perte (tanδc) du caoutchouc de chape et la tangente de perte (tanδb) du caoutchouc de base qui sont mesurées sous la condition d'une température de 30 °C, d'une fréquence de 10 Hz, d'une contrainte initiale de 5 % et d'une contrainte dynamique de 1 %, le mode de déformation étant le mode en traction, satisfont l'(expression 2) suivante :

$$1{,}3 \leq (\tan\delta c/\tan\delta b) < 3{,}0 \quad \text{(expression 2).}$$

**4.** Bandage pneumatique selon l'une quelconque des revendications 1 à 3, dans lequel
une tangente de perte (tanδc) du caoutchouc de chape, la tangente de perte (tanδb) du caoutchouc de base et la tangente de perte (tanδs) du caoutchouc de parois latérales qui sont mesurées sous la condition d'une température de 30 °C, d'une fréquence de 10 Hz, d'une contrainte initiale de 5 % et d'une contrainte dynamique de 1 %, le mode de déformation étant le mode en traction, satisfont l'(expression 3) suivante :

$$\tan\delta b < \tan\delta s < \tan\delta c \quad \text{(expression 3).}$$

**5.** Bandage pneumatique selon l'une quelconque des revendications 1 à 4, dans lequel
un module d'élasticité complexe Eb* du caoutchouc de base et un module d'élasticité complexe Ec* du caoutchouc de chape qui sont mesurés sous une condition d'une température de 30 °C, d'une fréquence de 10 Hz, d'une contrainte initiale de 5 % et d'une contrainte dynamique de 1 %, le mode de déformation étant un mode d'étirement, satisfont l'(expression 4) suivante :

$$Eb^*/Ec^* < 1 \quad \text{(expression 4).}$$

**6.** Bandage pneumatique selon l'une quelconque des revendications 1 à 5, dans lequel

une portion de rainure autre que les portions de rainures circonférentielles est formée dans une portion de surface de la portion formant bande de roulement, et
dans la surface de contact au sol, une aire de la portion de rainure autre que les portions de rainures circonférentielles est plus petite qu'une aire totale des portions de rainures circonférentielles.

7. Bandage pneumatique selon l'une quelconque des revendications 1 à 6, dans lequel si la surface de contact au sol est divisée en quatre régions égales dans une direction de la largeur du pneumatique, une valeur d'aire totale obtenue en soustrayant des aires de rainures dans deux régions côté intérieur parmi les quatre régions, d'une aire totale des deux régions côté intérieur, est de 30 à 60 % d'une aire obtenue en soustrayant des aires de rainures dans une totalité de la surface de contact au sol, d'une aire de la totalité de la surface de contact au sol.

8. Bandage pneumatique selon l'une quelconque des revendications 1 à 7, dans lequel si la surface de contact au sol est divisée en quatre régions égales dans une direction de la largeur du pneumatique, une portion en relief circonférentielle, qui est incluse parmi la pluralité de portions en relief circonférentielles et qui est située dans une région la plus proche d'un équateur de pneumatique parmi les quatre régions, a une fente formée de manière à connecter l'une à l'autre les deux portions latérales de la portion en relief circonférentielle, et une ligne droite connectant l'une à l'autre les deux portions d'extrémité de la fente est inclinée à raison de 15 à 25° par rapport à la direction de la largeur.

9. Bandage pneumatique selon l'une quelconque des revendications 1 à 8, dans lequel si la surface de contact au sol est divisée en quatre régions égales dans une direction de la largeur du pneumatique, une proportion d'une aire totale de portions de rainures circonférentielles, qui sont incluses parmi la pluralité de portions de rainures circonférentielles et qui sont situées dans deux régions côté intérieur parmi les quatre régions, sur une aire totale des deux régions côté intérieur, est inférieure à une proportion d'une aire totale de portions de rainures circonférentielles, qui sont incluses parmi la pluralité de portions de rainures circonférentielles et qui sont situées dans deux régions côté extérieur parmi les quatre régions, sur une aire totale des deux régions côté extérieur.

10. Bandage pneumatique selon l'une quelconque des revendications 1 à 9, dans lequel le caoutchouc de bande de roulement est formé à partir d'une composition de caoutchouc contenant un caoutchouc styrène-butadiène et/ou un caoutchouc butadiène à titre de composant de caoutchouc.

11. Bandage pneumatique selon la revendication 10, dans lequel le caoutchouc de bande de roulement est formé à partir de la composition de caoutchouc contenant en outre pas moins de 50 parts en masse de silicium pour 100 parts en masse du composant de caoutchouc.

12. Bandage pneumatique selon l'une quelconque des revendications 1 à 11, dans lequel le caoutchouc de parois latérales est formé à partir d'une composition de caoutchouc contenant un caoutchouc à base d'isoprène et un caoutchouc butadiène à titre de composants de caoutchouc.

13. Bandage pneumatique selon la revendication 12, dans lequel le caoutchouc de parois latérales est formé à partir de la composition de caoutchouc contenant en outre pas moins de 50 parts en masse de noir de carbone pour 100 parts en masse des composants de caoutchouc.

14. Bandage pneumatique selon l'une quelconque des revendications 1 à 13, dans lequel le bandage pneumatique est un bandage pneumatique pour voitures particulières.

**Fig. 1**

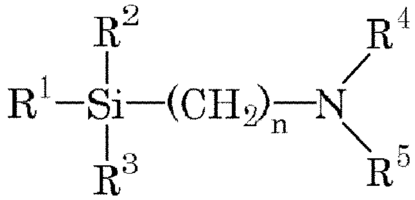

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015159538 A
- JP 2018103931 A
- JP 2019084961 A
- JP 2020066394 A
- EP 2676808 A
- EP 3279011 A
- US 4414370 A
- JP S596207 A
- JP H558005 B
- JP H1313522 A
- US 5010166 A


### Non-patent literature cited in the description


- *TREND,* 2000, (3), 42-45